# EUROPEAN PATENT APPLICATION

(11) **EP 2 083 172 A1**
(43) Date of publication of application: **29.07.2009**
(21) Application number: 08001138.0
(22) Date of filing: 22.01.2008
(51) Int. Cl.: F04D 17/12, F04D 25/02, F01D 15/02

(54) **Multi-body compressor train**

(71) Applicant: SIEMENS AKTIENGESELLSCHAFT, 80333 München (DE)
(72) Inventor: Lenderink, Gerrit, 7165AI Rietmolen (NL)

(57) **Abstract**

A Multi-body compressor train comprises a drive motor (1), two gears (4, 7) and three compressors (6, 10, 11). The drive motor (1) is provided with a double end motor shaft. The first end (2) of the motor shaft is connected to a first gear (4), which is connected to a first single compressor (6). The second end (3) of the motor shaft is connected to a second gear (7) having second and third output shafts (8, 9). The second output shaft (8) is connected to a second single compressor (10) and the third output shaft (9) is connected to a third single compressor (11).

## Description

The invention relates to multi-body compressor train with the features of the preamble of claim 1.

Such motor driven multi-body compressor trains are assigned for large power demands. Known trains comprise a single end driver driving a step-up gearbox, and three compressor bodies in an inline train arrangement, whereby the compressors are arranged serially on a shaft, which is connected to output shaft of the gear. Due to this arrangement the motor driven multi-body compressor trains have a number of problems. These problems arise from the power gear ratio options which are limited by field references.

Especially the main high speed coupling between the gearbox and the first compressor is limited in power/speed combinations mandating lower running speeds than optimum for the compressor. The first compressor body has to handle large and heavy couplings on both the driven and the driving end, which results in non-optimum rotor dynamics. In addition large diameter dry gas seals will be required, which is not preferred for high pressure and/or high speed applications. A removal of an inner bundle especially of the first and second compressor body in a three body arrangement requires, that major train components are to be removed before the bundle can be removed. This action extends the overhaul time, increases the risk of damage to critical components and requires breaking the main process lines requiring pressure testing of the process piping prior to start-up in a disadvantageous way. The access to various train components is non-optimum due to the close proximity of major other train components. This creates less optimum ergonomically conditions and increases the risk of trip hazards.

Double drive solutions applied with motor drive are known. But in the case of a three body compressor train one compressor body is to be installed between the gearbox and another compressor body. Therefore the double drive solutions offer the above mentioned disadvantages as well.

From US 5,402,631 an integration of combustor-turbine units and integral-gear pressure processors are known according to which an embodiment can be used to avoid the risk of combustor-turbine failure with resulting loss of compressed air supply to a process plant. The embodiment allows drive either by an electric motor or gas turbine. The motor is connected through a first coupling to a shaft which is integral with a first bull gear, which is integral with a high pressure compressor. Meshing with a first bull gear is a first pinion on which is mounted a second stage compressor stage and a third stage compressor stage. Also meshing with the first bull gear is a second pinion on which is mounted a fourth compressor stage and a fifth compressor stage. The combustor-turbine unit that drives the high pressure compressor has a first output shaft that is connected by a second coupling to a third pinion that meshes with the bull gear. The combustor-turbine has a second output shaft which is connected by a third coupling to a shaft that is integral with a second bull gear. Meshing with the second bull gear is a fourth pinion on which is mounted a first compression stage. The second bull gear and the first compression stage comprise a low pressure compressor.

It is an object of the invention to arrange for a three body compressor train which is more flexible with respect to the power/gear ratio and which eases the withdrawal of inner bundles.

The object is accomplished in a multi-body compressor train according to the preamble of claim 1 by the characterizing features of this claim. Advantageous embodiments of the invention are described in the subclaims.

The inventive solution enables
- to split the power into two main portions for the gearboxes enabling much higher application flexibility for the power/gear ratio and the selection of motor and compressor speeds,
- to split the power into three portions for the high speed couplings enabling application of well referenced couplings,
- the elimination of the need for drive through on the compressors thereby optimizing rotor dynamics,
- the elimination of the need for removing major equipment items in case of inner bundle withdrawal, i.e. no process lines have to be broken,
- to split the power into portions enabling the use of reduced bearings, barrier seals and dry gas seals thereby optimizing unit reliability.

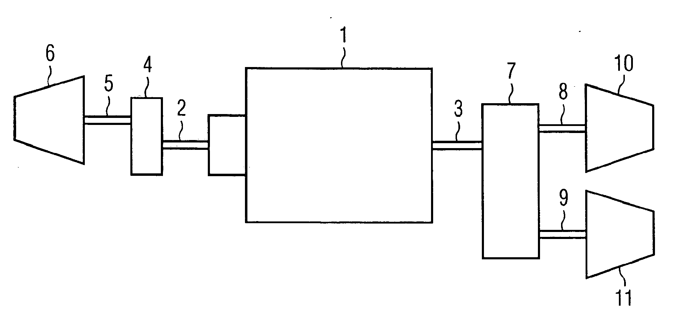

An exemplary embodiment of the invention is shown in the drawing and will be explained in greater detail below. The drawing shows a schematic embodiment of a multi-body compressor train.

A motor 1 is provided with a motor shaft having a first end 2 on one side of the motor and a second end 3 on the other side of the motor. The first end 2 of the motor shaft is coupled to a first gear 4. A sole first output shaft 5 of the first gear 4 is coupled to a first single compressor 6, which is preferably a low pressure compressor of a multi-stage compressor arrangement.

The second end 3 of the motor shaft is coupled to a second gear 7 having second and third output shafts 8, 9. The second and third output shaft 8, 9 is coupled respectively to a second and third single compressor 10, 11. The second single compressor 10 is preferably the medium pressure compressor and the third single compressor 11 is preferably the high pressure compressor of the multi-stage compressor arrangement.

The second gear 7 in the multi-stage compressor arrangement is preferably a compound gear.

## Claims

1. Multi-body compressor train, comprising a drive motor (1), two gears (4, 7) and three compressors (6, 10, 11), **characterized in that** the drive motor (1) is provided with a double end motor shaft, the first end (2) of which is connected to a first gear (4), having a first output shaft (5) which is connected to a first single compressor (6), the second end (3) of the motor shaft is connected to a second gear (7) having second and third output shafts (8, 9), each of which is connected respectively to a second and third single compressor (10, 11).

2. Multi-body compressor train, according to claim 1, **characterized in that** the first single compressor (6) connected to the first gear (4) is the low pressure compressor, the second single compressor (10) connected to second output shaft (8) of the second gear (7) is the medium pressure compressor and the third single compressor (11) connected to third output shaft (9) of the second gear (7) is the high pressure compressor of a multi-stage compressor arrangement.

3. Multi-body compressor, according to claim 1, **characterized in that** the second gear (7) is a compound gear.
